# EUROPÄISCHE PATENTSCHRIFT

(11) **EP 0 479 817 B1**
(45) Veröffentlichungstag und Bekanntmachung des Hinweises auf die Patenterteilung: **03.11.1993**
(21) Anmeldenummer: 90909131.6
(22) Anmeldetag: 19.06.1990
(51) Int. Cl.: F16K 11/044

(54) **AUTOMATISCHER WANNEN/BRAUSE-UMSCHALTER**
AUTOMATIC REVERSING FAUCET FOR A BATH/SHOWER
ROBINET INVERSEUR AUTOMATIQUE POUR BAIGNOIRE/DOUCHE

(30) Priorität: 28.06.1989 DE 3921194
(43) Veröffentlichungstag der Anmeldung: 15.04.1992
(73) Patentinhaber: IDEAL-STANDARD GMBH, D-53008 Bonn (DE)
(72) Erfinder: MÜLLER, Jürgen, D-5586 Reil (DE)
(74) Vertreter: Müller, Karl-Ernst, Dr., Dipl.-Ing.
(86) Internationale Anmeldenummer: DE9000462
(87) Internationale Veröffentlichungsnummer: WO9100461

(56) Entgegenhaltungen:
- DE-A- 3 713 296
- GB-A- 453 632
- GB-A- 1 203 517
- US-A- 2 591 514
- US-A- 4 503 877

## Beschreibung

Die Erfindung betrifft einen automatischen Umschalter für eine Wanne-Brause umschaltbare Wasserleitungsarmatur mit einem in die Armatur einschraubbaren Einsatz, in welche eine an ihrem einen Ende ein Verschlußglied und an ihrem anderen Ende einen Handknopf aufweisende Führungsstange gegen die Kraft einer sich am Verschlußglied der Führungsstange einerseits und an dem Einsatz andererseits abstützenden Feder axial verschiebbar ist, wobei das Verschlußglied in seiner ersten Stellung einen Wasserzufluß zur Wanne bewirkt und durch den Handknopf gegen die Federkraft in eine zweite den Wasserzufluß zur Brause bewirkende Stellung bringbar ist und in die Wannenfüllstellung rückgeführt wird, wenn der auf das Verschlußglied wirkende hydrostatische Druck kleiner als der Druck der Feder wird, wobei der Handknopf in der die Brause versorgenden Stellung arretierbar ist, und wobei der hülsenartig ausgebildete Handknopf mit seinem Innenraum einen auf dem Einsatz angebrachten Stift übergreift und auf diesem frei verschieblich geführt ist.

Ein gattungsgemäßer Umschalter ist in der DE-A-3 713 296 beschrieben; dabei ist der hülsenartig ausgebildete Handknopf auf dem Stift verschiebbar angeordnet und in seiner hochgezogenen, den Wasserzufluß zur Brause bewirkenden Stellung festlegbar, indem aufgrund entsprechender Formgebung von Stift und Innenraum der Hülse des Handknopfes durch Verdrehen des Handknopfes gegenüber dem Stift in der Brausestellung entsprechend ausgebildete Anschläge zwischen Stift und Handknopf in Eingriff gebracht werden und für die Arretierung des Handknopfes sorgen. Mit dem bekannten Umschalter ist der Nachteil verbunden, daß der Umschalter aufwendig herzustellen ist, weil insbesondere die Ausbildungen zum formschlüssigen Festlegen und Arretieren des Handknopfes an dem Stift sowie dem Innenraum der Hülse eine entsprechend aufwendige Konstruktion und Bearbeitung erfordern. Ein weiterer Nachteil ergibt sich daraus, daß der gattungsgemäße Umschalter jeweils nur in seiner Endstellung festlegbar ist.

Der Erfindung liegt daher die Aufgabe zugrunde, einen gattungsgemäßen Umschalter einfacher auszuführen, leichter herstellbar und montierbar zu machen und in seiner Bedienung zu verbessern.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die erfindungsgemäße Lösung geht von dem Grundgedanken aus, daß zwischen der Wandung des Handknopfes und dem Stift kraftschlüssig wirkende Klemmittel angeordnet sind, welche in der Brausestellung des Handknopfes durch Verdrehen des Handknopfes gegenüber dem ortsfesten Einsatz mit Stift in ihre kraftschlüssige Arretierstellung bringbar sind. Daraus ergibt sich der Vorteil, daß bei Erreichen der Brausestellung des Umschalters mit aus dem Einsatz herausgehobenem Handknopf und damit verbundener axialer Verschiebung der Führungsstange mit Verschlußglied die Arretierung der Führungsstange gegenüber dem Einsatz durch eine Verdrehung des Handknopfes in beliebiger Richtung erfolgt, weil durch diese Verdrehung die vorgesehenen Klemmittel zwischen dem Handknopf und dem Einsatz aktiviert werden, welche den Handknopf mit Führungsstange und Verschlußglied in der Brausestellung gegenüber dem Einsatz festlegen. In vorteilhafter Weise ist damit gewährleistet, daß die Feststellbarkeit in allen Stellungen, das heißt in der Wannenstellung, in der Brausestellung, aber auch in Zwischenstellungen erfolgen kann, weil eine Arretierung der Führungsstange gegenüber dem Einsatz auch bei nicht vollständig herausgehobener Führungsstange möglich ist, bei welcher Wasserwege sowohl zur Wanne wie auch zur Brause teilgeöffnet sind. Aufgrund seiner Ausbildung mit wenigen Einzelteilen weist der erfindungsgemäße Umschalter eine einfachere und leichter herstellbare Ausbildung auf.

Nach einem bevorzugten Ausführungsbeispiel der Erfindung sind am Umfang des am Einsatz ausgebildeten Stiftes zwei sich gegenüberliegende gerade Flächen mit zwei dazwischen angeordneten gekrümmten Flächen ausgebildet, wobei in dem den Stift übergreifenden Innenraum des Handknopfes an diesem eine zweischenkelige Feder verdrehfest verankert ist, deren Federschenkel in der Wannenstellung des Handknopfes parallel zu den geraden Flächen des Stiftes verlaufen, so daß in dieser Stellung der Handknopf mit Führungsstange gegenüber dem Stift frei axial verschiebbar ist. Bei einer Verdrehung des Handknopfes zur Arretierung des Handknopfes mit Führungsstange gegenüber dem Einsatz schieben sich die Federschenkel, deren Abstand hierzu bei Entspannung kleiner gewählt ist als der über die gekrümmten Flächen des Stiftes gemessene Durchmesser unter spreizendem Aufbiegen über die gekrümmten Flächen des Stiftes, so daß sich eine Klemmwirkung der Federschenkel gegenüber dem Stift des Einsatzes ergibt. Die diesbezüglich aufgebrachte Klemmkraft ist größer als die Rückstellkraft der die Führungsstange in ihre Wannenstellung belastenden Druckfeder. Hierzu ist die Klemmfeder in dem Handknopf verdrehsicher eingepreßt, wie dies ein Ausführungsbeispiel der Erfindung vorsieht.

In der Zeichnung ist ein Ausführungsbeispiel der Erfindung wiedergegeben, welches nachstehend beschrieben wird. Die einzige Figur zeigt einen Umschalter im Schnitt in einer auf den Wasserzulauf zur Wanne bezogenen Ausgangsstellung.

Der Umschalter besteht aus einer Führungsstange 10, an deren einem, unteren Ende ein Verschlußglied 11 und an deren anderem, oberen Ende ein Handknopf 12 jeweils fest mit der Führungsstange 10 verbunden sind. Das Verschlußglied 11 besteht aus einem wulstartigen Dichtungsring 13, der zwischen zwei an der Führungsstange 10 angeformten Flanschen 14 eingelegt ist.

Die Führungsstange 10 ist in einem Einsatz 15 axial verschiebbar geführt, der über ein an seinem Oberteil 16 vorgesehenen Außengewinde 17 in eine nicht dargestellte Armatur einschraubbar ist, so daß bei feststehendem Einsatz 15 eine axiale Verschiebung der Führungsstange 10 zu einer Relativbewegung des Verschlußgliedes 13 im Verhältnis zu dem Einsatz 15 führt. Der Einsatz 15 weist neben seinem Oberteil 16, in welchem die Führungsstange 10 über Führungshilfen 18 geführt ist, ein unteres Sitzteil 19 auf, welches an seinem unteren Ende einen Sitz 20 zur dichtenden Anlage des Verschlußgliedes 11 bei aus dem Einsatz 15 herausgehobener Stellung der Führungsstange 10 ausbildet. Oberteil 16 und Sitzteil 19 des Einsatzes 15 sind über am Umfang verteilte Stege 31 miteinander verbunden, wobei zwischen den Stegen Durchtritte 33 für den Wasserdurchfluß ausgebildet sind. Der Einsatz 15 hat an seinem Oberteil 16 wie auch an seinem Sitzteil 19 je einen Dichtungsring 21.

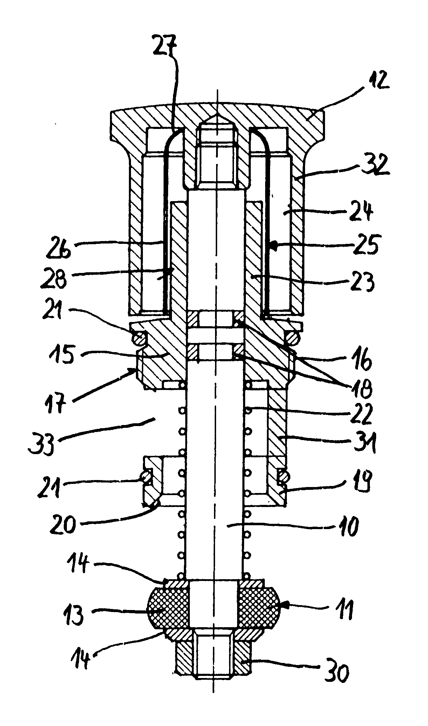

Die Führungsstange 10 ist über eine Druckfeder 22 gegen den Einsatz 15 verspannt und in die aus Figur 1 ersichtliche Wannenstellung belastet. Hierzu stützt sich die die Führungsstange 10 umgebende Schraubendruckfeder 22 an dem oberen der Flansche 14 der Führungsstange 10 und an der Unterseite des Oberteils 16 des Einsatzes 15 ab, wobei die Führungsstange 10 gegen den Einsatz 15 durch eine Kontermutter 30 gesichert ist.

Der Einsatz 15 weist auf seiner Oberseite einen parallel zur Führungsstange 10 und diese umgreifenden Stift 23 auf, der von dem hülsenartig ausgebildeten Handknopf 12 mit Innenraum 24 übergriffen wird, wobei die Wandungen 32 des Handknopfes 12 in der Wannenstellung bis auf die Oberseite des Einsatzes 15 herunterreichen. Im Innenraum 24 des Handknopfes 15 ist eine U-förmige Feder 25 mit zwei Federschenkeln 26 angeordnet, die mit ihrer Schenkelverbindung 27 an der geschlossenen Seite des hülsenartigen Handknopfes 12 verdrehfest eingepreßt ist.

Der Stift 23 des Einsatzes 15 bildet zwei einander gegenüberliegende gerade Flächen 28 und zwei dazwischen angeordnete gekrümmte Flächen an seinem Umfang aus, wobei die Schenkel 26 der Feder 25 in der Wannenstellung einen parallelen Verlauf zu den geraden Flächen 28 des Stiftes 23 haben. Der Abstand der Federschenkel 26 bei entspannter Feder entspricht unter Vorsehung eines geringen Spiels dem zwischen den geraden Flächen 28 des Stiftes 23 gemessenen Durchmesser des Stiftes, während der über die gekrümmten Flächen gemessene Durchmesser des Stiftes 23 größer ist als der Abstand der Federschenkel 26 in deren Ruhelage zueinander.

Aus der in der Figur gezeigten Darstellung ergibt sich die Wannenstellung des Umschalters, wobei der Wasserzulauf in Übereinstimmung mit der sich aus der zum Stand der Technik benannten DE-A 3 713 296 ergebenden Anordnung zwischen dem Verschlußglied 13 und dem Sitzteil 19 des Einsatzes 15 befindet, so daß das Wasser über den Einsatz 15 und die Durchtrittsöffnungen 33 zum Wannenauslaß strömt; in dieser Stellung sitzt das Verschlußglied 13 auf der in der Verlängerung der Führungsstange 10 angeordneten Auslaßöffnung zur Brause auf und verschließt diese. Beim Umschalten durch axiales Verschieben der Führungsstange 10 gegenüber dem Einsatz 15 gelangt das Verschlußglied 13 zur Anlage am Sitzteil 19 und sperrt somit den Wasserweg zum Wannenauslauf, gibt damit den Wasserweg zur Brause frei. In dieser Stellung ist, wie ausgeführt, die Führungsstange 10 durch Verdrehen in beliebiger Richtung in einem Winkel zwischen 35 bis 145 Grad arretierbar, so daß der Benutzer bei der Bedienung des Handknopfes im Hinblick auf die Arretierung der Führungsstange 10 keine besondere Sorgfalt walten zu lassen braucht. Darüber hinaus kann die Führungsstange 10 auch in Teilstellungen gegenüber dem Einsatz 15 festgelegt werden, weil die Klemmwirkung der Klemmfeder 25 in jeder beliebigen Stellung des Handknopfes 12 zum Stift 23 mittels Drehen des Handknopfes arretiert werden kann, wobei in den Zwischenstellungen Teilströme über beide Wasserwege zur Wanne und zur Dusche geleitet werden.

Die Lösung der Handarretierung und Umschaltung vom Brausenzum Wannenauslauf geschieht durch Drehen des Handknopfes 12 in seiner Ausgangsstellung, wobei aufgrund der Drehung der gerade ausgebildeten Federflächen 26 aus den gekrümmten Flächen des Stiftes 23 sich in dem Übergangsbereich eine Selbstrückstellung ergibt, so daß die Ausgangsposition für die Wannenstellung von dem Benutzer beim Drehen des Handknopfes 12 leicht identifizierbar ist.

## Patentansprüche

1. Automatischer Umschalter für eine Wanne-Brause umschaltbare Wasserleitungsarmatur mit einem in die Armatur einschraubbaren Einsatz (15), in welche eine an ihrem einen Ende ein Verschlußglied (11) und an ihrem anderen Ende einen Handknopf (12) aufweisende Führungsstange (10) gegen die Kraft einer sich am Verschlußglied (11) der Führungsstange (10) einerseits und an dem Einsatz (15) andererseits abstützenden Feder (22) axial verschiebbar ist, wobei das Verschlußglied (11) in seiner ersten Stellung einen Wasserzufluß zur Wanne bewirkt und durch den Handknopf (12) gegen die Federkraft (22) in eine zweite den Wasserzufluß zur Brause bewirkende Stellung bringbar ist und in die Wannenfüllstellung rückgeführt wird, wenn der auf das Verschlußglied (11) wirkende hydrostatische Druck kleiner als der Druck der Feder (22) wird, wobei der Handknopf (12) in der die Brause versorgenden Stellung arretierbar ist, und wobei der hülsenartig ausgebildete Handknopf (12) mit seinem Innenraum (24) einen auf dem Einsatz (15) angebrachten Stift (23) übergreift und auf diesem frei verschieblich geführt ist, dadurch gekennzeichnet, daß zwischen der Wandung (32) des Handknopfes (12) und dem Stift (23) kraftschlüssig wirkende Klemmmittel (25) angeordnet sind, welche in der Brausestellung des Handknopfes (12) durch Verdrehen des Handknopfes (12) gegenüber dem ortsfesten Einsatz (15) mit Stift (23) in ihre kraftschlüssige Arretierstellung bringbar sind.

2. Umschalter nach Anspruch 1, dadurch gekennzeichnet, daß der Umfang des Stiftes (23) zwei sich gegenüberliegende gerade Flächen (28) und zwei dazwischen angeordnete gekrümmte Flächen ausbildet und daß in dem Innenraum (24) des hülsenförmigen Handknopfes (12) an diesem eine Zweischenkelige Feder (25) verdrehfest angeordnet ist, deren Federschenkel (26) in der Wannenstellung des Handknopfes (12) parallel zu den geraden Flächen (28) des Stiftes (23) verlaufen.

3. Umschalter nach Anspruch 2, dadurch gekennzeichnet, daß der Abstand der Federschenkel (26) bei Entspannung kleiner ist als der über die gekrümmten Flächen gemessene Durchmesser des Stiftes (23).

4. Umschalter nach einem der Ansprüche 1 bis 3, dadurch gekennzeichnet, daß die Feder (25) U-förmig ausgebildet und mit ihrer Schenkelverbindung (27) in den Innenraum (24) des hülsenförmigen Handknopfes (12) eingepreßt und an der geschlossenen Seite des Handknopfes (12) verdrehsicher festgelegt ist.

## Claims

1. Automatic change-over switch for a water-pipe fitting which can be switched over between bath and shower, having an insert (15) which can be screwed into the fitting, into which a guide rod (10), which has a sealing member (11) at its one end and a hand button (12) at its other end, can be axially displaced against the force of a spring (22) supported on the sealing member (11) of the guide rod (10), on the one hand, and on the insert (15), on the other hand, with the sealing member (11) effecting, in its first position, a water inflow to the bath and being capable of being brought, by means of the hand button (12) against the spring force (22), into a second position which effects the water inflow to the shower and being guided back into the bath-filling position when the hydrostatic pressure acting on the sealing member (11) becomes smaller than the pressure of the spring (22), with it being possible to arrest the hand button (12) in the position which supplies the shower, and with the hand button (12), which is formed like a sleeve, engaging with its interior space (24) over a pin (23) provided on the insert (15) and being guided in a freely displaceable manner on said pin, characterised in that there are arranged between the wall (32) of the hand button (12) and the pin (23) clamping means (25) which act in a force-locking manner and which can be brought into their force-locking arresting position, in the shower-position of the hand button (12), by twisting the hand button (12) in relation to the fixed insert (15) with pin (23).

2. Change-over switch according to claim 1, characterised in that the periphery of the pin (23) forms two straight surfaces (28) which lie opposite each other and two curved surfaces which are arranged in between and in that a two-legged spring (25) is arranged in the interior space (24) of the sleeve-like hand button (12) on the latter in a manner secure against torsion, the spring legs (26) of which spring (25), in the bath-position of the hand button (12), extend so as to be parallel to the straight surfaces (28) of the pin (23).

3. Change-over switch according to claim 2, characterised in that the spacing of the spring legs (26), in the case of relaxation, is less than the diameter of the pin (23) measured across the curved surfaces.

4. Change-over switch according to one of the claims 1 to 3, characterised in that the spring (25) is formed in a U-shaped manner and is pressed with its leg connection (27) into the interior space (24) of the sleeve-like hand button (12) and is fixed in a manner secure against torsion on the closed side of the hand button (12).

## Revendications

1. Commutateur automatique pour une robinetterie de conduite d'eau susceptible d'être commutée en mode baignoire/douche, avec une garniture (15) susceptible d'être vissée dans la robinetterie et dans laquelle, une tige de guidage présentant un obturateur (11) à l'une de ses extrémités et une manette (12) à son autre extrémité, est susceptible d'être déplacée axialement, à l'encontre de la force d'un ressort (22) prenant appui, d'une part, sur l'obturateur (11) et, d'autre part, sur la garniture (15), l'obturateur (11) provoquant dans sa première position une amenée d'eau à la baignoire, et étant susceptible d'être placé, au moyen de la manette (12), à l'encontre de la force du ressort (22), dans une deuxième position, provoquant l'amenée d'eau à la douche et ramené en position de remplissage de baignoire, lorsque la pression hydrostatique agissant sur l'obturateur (11) est inférieure à la pression exercée par le ressort (22), la manette (12) étant susceptible d'être fixée dans la position d'alimentation de douche, et la manette (12), réalisée sous forme de douille, entourant par son espace intérieur (24) une tige (23) montée sur la garniture (15) en étant guidée mobile librement sur celle-ci, caractérisé en ce qu'entre la paroi (32) de la manette (12) et la tige (23) sont disposés des moyens de serrage (25) à action mécanique, susceptibles d'être placés dans la position de douche de la manette (12), par rotation de la manette (12) par rapport à la garniture (15) fixe, avec la tige (23) placée dans sa position de blocage mécanique.

2. Commutateur selon la Revendication 1.-, caractérisé en ce que sur la périphérie de la tige (23) sont ménagées deux faces droites (28) opposées et deux faces incurvées interposées et en ce que dans l'espace intérieur (24) de la manette (12) en forme de douille est monté, bloqué en rotation vis-à-vis de celle-ci, un ressort (25) à deux branches, dont les branches (26) s'étendent, dans la position de la manette (12) correspondant à l'alimentation de la baignoire, parallèlement aux faces droites (28) de la tige (23).

3. Commutateur selon la Revendication 2.- caractérisé en ce que la distance entre les branches de ressort (26), lors de leur relaxation, est inférieure au diamètre de la tige (23) mesure sur les faces incurvées.

4. Commutateur selon l'une des Revendications 1 à 3.- caractérisé en ce que le ressort (25) est en forme de U, est enfoncé par sa zone de liaison (27) entre les branches dans l'espace intérieur (24) de la manette (12) en forme de douille et est monté bloqué en rotation du côté fermé de la manette (12).
